# EUROPÄISCHE PATENTSCHRIFT

(11) **EP 0 575 022 B1**
(45) Veröffentlichungstag und Bekanntmachung des Hinweises auf die Patenterteilung: **28.08.1996**
(21) Anmeldenummer: 93250160.4
(22) Anmeldetag: 09.06.1993
(51) Int. Cl.: G03B 17/14, G02B 7/08

(54) **Antriebseinheit zur Zoom-, Fokus- oder Irisblenden-Einstellung für Kameraobjektive**
Drive unit for setting a zoom, a focus or an iris control in a camera lens
Unité d'entraînement pour le réglage du zoom, de la focalisation ou du diaphragme dans un objectif de caméra

(30) Priorität: 17.06.1992 DE 4220129
(43) Veröffentlichungstag der Anmeldung: 22.12.1993
(73) Patentinhaber: ARNOLD & RICHTER CINE TECHNIK GMBH & CO. BETRIEBS KG., D-80799 München (DE)
(72) Erfinder: Bednarsky, Kurt, A-1150 Wien (AT); Filous, Pavel, A-2553 Guntramsdorf (AT); Bayerl, Eugen, D-85551 Kirchheim (DE); Herzog, Karl, D-82024 Taufkirchen (DE)
(74) Vertreter: Ninnemann, Detlef, Dipl.-Ing.

(56) Entgegenhaltungen:
- CH-A- 596 560
- US-A- 2 797 618
- US-A- 2 940 373
- US-A- 4 057 327

## Beschreibung

Die Erfindung betrifft eine Antriebseinheit zur Zoom-, Focus- oder Irisblenden-Einstellung für Kameraobjektive nach dem Oberbegriff des Anspruchs 1.

Die Einstellung der Irisblendenöffnung, der Schärfe und der Brennweite eines Kameraobjektives erfolgt an entsprechenden Objektivringen. Zur einfacheren und zuverlässigeren Einstellung der Objektivringe werden bevorzugt Antriebseinheiten verwendet, die in horizontaler oder vertikaler Anordnung am Kameraobjektiv angeordnet sind. Die Antriebseinheiten übertragen jeweils über ein Zahnritzel ein Drehmoment auf die Außenverzahnung eines Objektivringes und bewirken auf diese Weise eine Einstellung des Objektivringes vgl. z.B. US-A-2 797 618, CH-A-596 560 oder USA 2 940 373.

Häufig ergibt sich jedoch das Problem, daß bei der Verstellung eines Objektivringes der Objektivring in axialer Richtung verfahren wird-und das Zahnritzel dieses Objektivringes oder auch eines anderen Objektivringes nicht mehr in die entsprechende Außenverzahnung eingreifen kann, so daß keine weitere Verstellung des Objektivringes möglich ist.

Dies ist insbesondere bei schmalen Objektivringen bzw. schmalen Zahnrädern der Fall, wie sie bei einem beengten Bauraum aus Platzgründen häufig erforderlich sind.

Insbesondere ergibt sich dieses Problem bei meist sehr schmal ausgelegten Blendenringen, wenn diese am festbrennweitigen Kameraobjektiv vor dem Fokusring angeordnet sind. Bei Verstellen der Fokus-Einstellung wandert der Blendenring leicht aus dem Bereich heraus, in dem das Zahnrad der Antriebseinheit für die Iris-Einstellung und die Außenverzahnung des Blendenringes ineinander greifen können.

Das oben beschriebene Problem kann aber je nach Objektivtyp auch am Zoomring, am Focusring und an einem hinter dem Zoomring oder dem Focusring angeordneten Blendenring auftreten.

Der Erfindung liegt die Aufgabe zu Grunde, eine Antriebseinheit zur Zoom-, Focus- oder Irisblenden-Einstellung für Kameraobjektive der eingangs genannten Gattung zur Verfügung zu stellen, die auch bei einem axialen Verfahren eines Objektivringes eine einfache und sichere Verstellung des Objektivringes ermöglicht.

Diese Aufgabe wird erfindungsgemäß durch die Merkmale des Anspruchs 1 erfüllt.

Die erfindungsgemäße Lösung ermöglicht durch Verwendung einer längsverschiebbaren Getriebeachse, deren axiale Bewegung über eine Mitnahmeeinrichtung mit einem axialen Verfahren des Objektivringes gekoppelt ist, eine Mitführung des Zahnritzels mit dem Objektivring und gewährleistet somit eine sichere Einstellung des jeweiligen Objektivringes. Dabei ist es unerheblich, ob die Verfahrbewegung durch die Verstellung des am Zahnritzel angeordneten oder eines anderen Blendenringes erfolgt.

Durch das Mitführen der Antriebseinheit wird weiter ermöglicht, die Objektivringe und die Antriebsritzel besonders schmal auszuführen. Die Materialkosten und der benötigte Bauraum können auf diese Weise verringert werden.

In einer bevorzugten Ausführungsform der Erfindung besteht die Mitnahmeeinrichtung aus zwei im wesentlichen kreisförmigen Bordscheiben, die entlang der Getriebeachse zu beiden Seiten des Zahnritzels angeordnet sind und beim Verstellvorgang jeweils an einer seitlichen Angriffsfläche des Objektivringes anliegen. Der Objektivring ist auf diese Weise von den beiden Bordscheiben umgriffen, so daß bei einem axialen Verfahren des Objektivringes die beiden Bordscheiben und damit auch das zwischen den Bordscheiben angeordnete Zahnritzel sowie die axial verschiebbare Getriebeachse mitgeführt werden.

Um ein Schleifen der Bordscheiben an den seitlichen Angriffsflächen des Objektivringes zu vermeiden, sind diese fest mit dem Zahnritzel verbunden, so daß Zahnritzel und Bordscheiben immer gemeinsam rotieren.

In einer vorteilhaften Ausgestaltung der erfindungsgemäßen Antriebseinheit weist die Getriebeachse eine Längsnut auf, in die senkrecht ein Stift eingreift. Dieser Stift ist fest mit einem rotierenden Antriebszahnrad verbunden und überträgt die Drehbewegung des Antriebszahnrades auf die Getriebeachse. Durch Führung des Stiftes in der Längsnut wird dabei eine axiale Verschiebung der Getriebeachse bei fortlaufender Drehmomentübertragung ermöglicht.

Weitere vorteilhafte Weiterbildungen der erfindungemäßen Antriebseinheit sind in den verbleibenden Unteransprüchen gekennzeichnet.

Die Erfindung soll nachfolgend unter Bezugnahme auf die Zeichnungen an einem Ausführungsbeispiel näher erläutert werden.

Es zeigen
- Figur 1: eine Schnittansicht einer erfindungsgemäßen Antriebseinheit,
- Figur 2: einen Längsschnitt durch eine Getriebeachse mit Längsnut und Stift,
- Figur 3: einen Querschnitt durch eine Getriebeachse mit Längsnut und
- Figur 4: eine Schnittansicht einer erfindungsgemäßen Antriebseinheit für zwei verschiedenen Stellungen des Blendenringes.

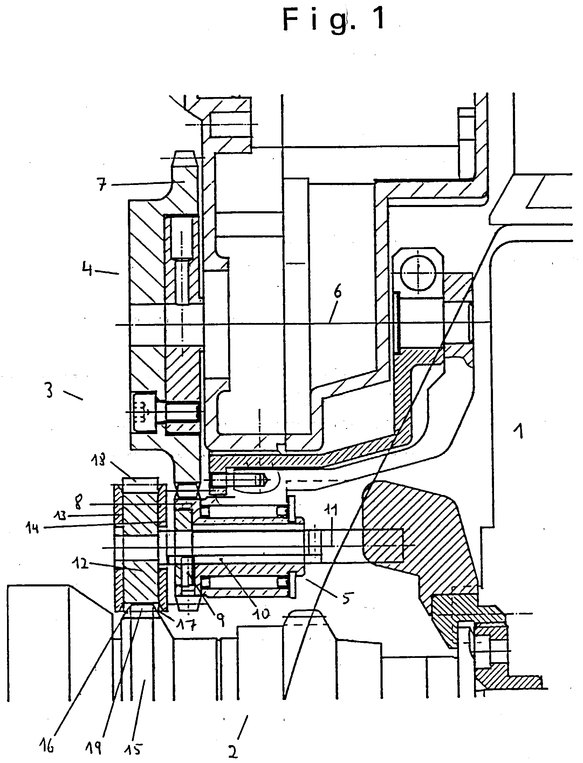

Figur 1 zeigt eine Kamera 1 mit einem Kameraobjektiv 2, an dem eine Antriebseinheit 3 bestehend aus einem Motorteil 4 und einem Getriebeteil 5 angeordnet ist. Über eine Motorachse 6 wird im Motorteil 4 ein erstes Zahnrad 7 angetrieben, das mit einem Antriebszahnrad 8 des Getriebeteils 5 verzahnt ist.

Am Antriebzahnrad 8 befindet sich ein fest mit dem Antriebzahnrad 8 verbundener Stift 9. Der Stift 9 greift senkrecht in eine Längsnut 10 der Getriebeachse 11 ein. Auf dem einen Ende der Getriebeachse 11 sitzt ein Zahnritzel 12 mit Zähnen 18. Die Drehachse des Zahnritzels 12 ist dabei die Getriebeachse 11.

Vor und hinter dem Zahnritzel 12 und direkt an dieses anliegend sind auf der Getriebeachse 11 zwei kreisförmige Bordscheiben 13 und 14 angeordnet, die fest und spielfrei mit der Getriebeachse 11 bzw. dem Zahnritzel 12 verbunden sind. Die Bordscheiben 13, 14 weisen dabei im wesentlichen den gleichen Durchmesser wie das Zahnritzel 12 auf. An der dem Zahnritzel 12 zugewandten Seite ist der Mantel jeder Bordscheibe 13, 14 keilförmig angeschrägt.

Die Drehbewegung der Motorachse 6 wird über das erste Zahnrad 7 auf das Antriebszahnrad 8 übertragen. Der Stift 9 läuft mit dem Antriebszahnrad 8 um und überträgt durch Eingriff in die Längsnut 10 der Getriebeachse 11 das Drehmoment des Antriebszahnrads 8 auf die Getriebeachse 11.

Bei einer Verschiebung der Getriebeachse 11 in axialer Richtung wird der Stift 9 entlang der Längsnut 10 geführt. Somit bleibt die Drehmomentübertragung des Stiftes 9 auf die Längsnut 10 bei einer axialen Verschiebung der Getriebeachse 11 erhalten. Erreicht der Stift 9 ein Ende der Längsnut 10, so ist eine weitere Verschiebung der Getriebeachse 11 nicht mehr möglich. Die Länge der Längsnut 10 bestimmt also die maximale Verschiebung der Getriebeachse 11.

Das Kameraobjektiv 2 weist einen Blendenring 15 zur Einstellung der Irisblende sowie weitere Objektivringe zur Zoom- und Focus-Einstellung auf. Der Blendenring 15 besitzt an seinem Mantel eine Außenverzahnung 19. Das Zahnritzel 12 greift mit seinen Zähnen 18 in die Außenverzahnung 19 ein und überträgt das Drehmoment der Getriebeachse 11 auf den Blendenring 15, so daß eine Einstellung des Blendenringes 15 erfolgt.

Die Bordscheiben 13, 14 liegen mit den dem Zahnritzel 12 zugewandten Seiten in ihrem äußeren Bereich jeweils an einer seitlichen Angriffsfläche 16, 17 des Blendenringes 15 an und umgreifen diesen dabei innerhalb eines Blendenringsektors. Die Drehfähigkeit des Blendenringes 15 ist dabei nicht eingeschränkt, da die Bordscheiben 13, 14 mit dem Zahnritzel 12 mitdrehen. Durch die keilförmige Ausgestaltung der entsprechenden Seiten der Bordscheiben 13, 14 wird eine vergrößerte Anliegfläche an den jeweiligen seitlichen Angriffsflächen 16, 17 des Blendenringes 15 erzielt.

Bei einer axialen Verschiebung des Blendenringes 15, etwa bei einer Fokus-Verstellung werden die Bordscheiben 13, 14 mitgeführt. Durch die feste Verbindung der Bordscheiben 13, 14 mit der Getriebeachse 11 wird dabei eine axiale Verschiebung der Getriebeachse 11 bewirkt. Eine fortlaufende Drehmomentübertragung ist dabei durch die oben beschriebene Ausgestaltung der Getriebeachse 11 mit einer Längsnut 10 gewährleistet, so daß das Zahnritzel 12 in Eingriff mit der Außenverzahnung 19 der Objektivringes 15 bleibt.

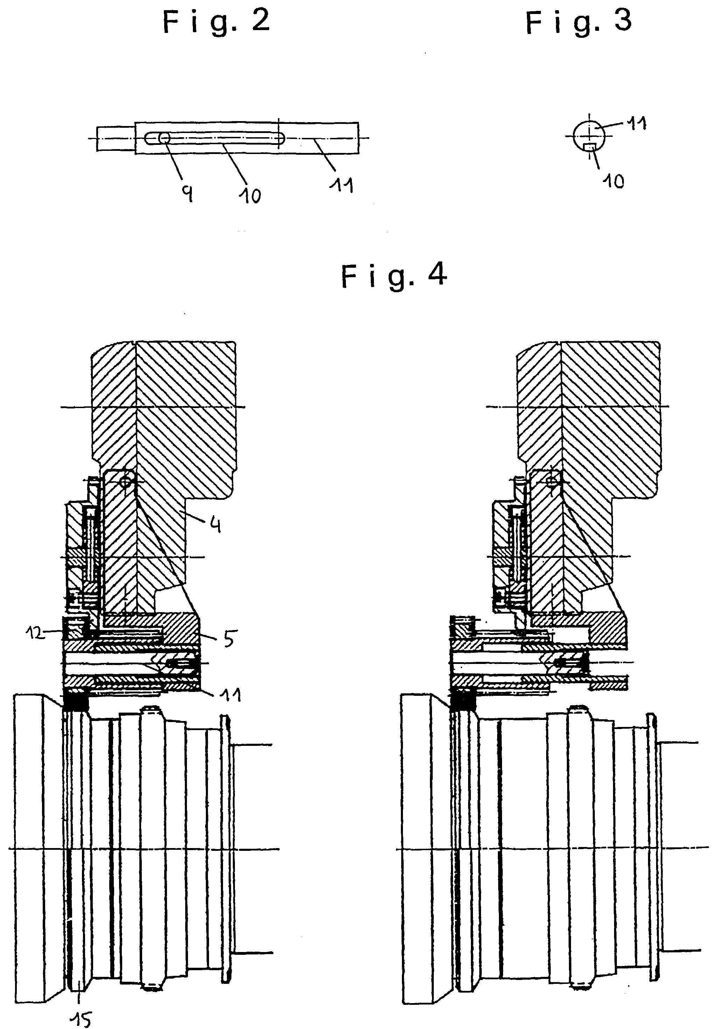

In Figur 4 ist die erfindungsgemäße Antriebseinheit 3 für zwei verschiedene Stellungen des Blendenringes 15 dargestellt.

In einem anderen Ausführungsbeispiel ist die erfindungsgemäße Antriebseinheit 3 am Zoomring des Kameraobjektives 2 angeordnet. Bei Verstellung des Zoomringes verfährt dieser aufgrund der eigenen Rotation axial entlang der Objektivachse. Gleichzeitig wird die Getriebeachse 11 mit dem Zahnritzel 12 über die Bordscheiben 13, 14 mitgeführt, so daß eine fortlaufende Drehmomentübertragung auf den Zoomring gewährleistet ist.

## Patentansprüche

1. Antriebseinheit (3) zur Zoom- (2), Focus- oder Irisblendenverstellung von Kameraobjektiven mit einer Getriebeachse (11) und einem mit der Getriebeachse (11) verbundenen Zahnritzel (12), das beim Verstellvorgang ein Drehmoment auf die Außenverzahnung (19) eines Objektivringes (15) überträgt,
**dadurch gekennzeichnet,**
daß die Getriebeachse (11) in axialer Richtung verschiebbar und mit einer Mitnahmeeinrichtung (13,14) verbunden ist, die beim Verstellvorgang einen Sektor des zu verstellenden Objektivringes (15) umgreift.

2. Antriebseinheit nach Anspruch 1, **dadurch gekennzeichnet**, daß die Mitnahmeeinrichtung aus zwei im wesentlichen kreisförmigen Bordscheiben (13, 14) besteht, die entlang der Getriebeachse (11) zu beiden Seiten des Zahnritzels (12) angeordnet sind und jeweils an einer seitlichen Angriffsfläche (16, 17) des Objektivringes (15) anliegen.

3. Antriebseinheit nach Anspruch 2, **dadurch gekennzeichnet**, daß die Bordscheiben (13, 14) fest mit dem Zahnritzel (12) verbunden sind.

4. Antriebseinheit nach Anspruch 2 oder 3, **dadurch gekennzeichnet**, daß der Mantel jeder Bordscheibe (13, 14) in Richtung des Zahnritzels (12) keilförmig angeschrägt ist.

5. Antreibseinheit nach mindestens einem der vorangehenden Ansprüche, **dadurch gekennzeichnet**, daß die Getriebeachse (11) eine Längsnut (10) aufweist, in die senkrecht ein Stift (9) eingreift, der fest mit einem Antriebszahnrad (8) verbunden ist.

## Claims

1. Drive unit (3) for zoom (2), focus or iris diaphragm adjustment of a camera lens with a gear axle (11) and a toothed pinion wheel (12) connected to the gear axle (11) to transfer during the adjustment process a torque to the outer gearing (19) of a lens ring (15),
characterised in that the gear axle (11) is displaceable in the axial direction and is connected to an entrainment device (13, 14) which during the adjustment process engages round a sector of the lens ring (15) to be adjusted.

2. Drive unit according to claim 1, characterised in that the entrainment device consists of two substantially circular rim discs (13, 14) which are mounted along the gear axle (11) either side of the toothed pinion wheel (12) and each adjoin a side engagement face (16, 17) of the lens ring (15).

3. Drive unit according to claim 2, characterised in that the rim discs (13, 14) are fixedly connected to the toothed pinion (12).

4. Drive unit according to claim 2 or 3 characterised in that the sleeve of each rim disc (13, 14) is inclined wedge-shaped towards the toothed pinion (12).

5. Drive unit according to at least one of the preceding claims, characterised in that the gear axle (11) has a longitudinal groove (10) in which a pin (9) engages at right angles, the pin being fixedly connected to a drive gear wheel (8).

## Revendications

1. Unité de commande (3) pour le réglage du diaphragme du zoom (2), de la mise au point ou de l'iris d'objectifs de caméra avec un axe d'entraînement (11) et un pignon denté (12) relié à l'axe d'entraînement (11) qui lors du processus de réglage, transmet un moment de torsion à la denture externe (19) d'un anneau porteur de l'objectif (15),
caractérisée en ce que
l'axe d'entraînement (11) est mobile en direction axiale et relié à un système d'entraînement (13, 14) qui lors du processus de réglage, entoure un secteur de l'anneau porteur de l'objectif (15) à régler.

2. Unité de commande selon la revendication 1, caractérisée en ce que le système d'entraînement se compose de deux poulies à rebord (13, 14) essentiellement circulaires qui sont agencées le long de l'axe d'entraînement (11) des deux côtés du pignon denté (12) et reposent à chaque fois contre une surface latérale de contact (16, 17) de l'anneau porteur de l'objectif (15).

3. Unité de commande selon la revendication 2, caractérisée en ce que les poulies à rebord (13, 14) sont solidement reliées au pignon denté (12).

4. Unité de commande selon la revendication 2 ou 3, caractérisée en ce que l'enveloppe de chaque poulie à rebord (13, 14) se rétrécit en forme de coin dans la direction du pignon denté (12).

5. Unité de commande selon au moins l'une des revendications précédentes, caractérisée en ce que l'axe d'entraînement (11) présente une rainure longitudinale (10) dans laquelle s'insère perpendiculairement une cheville (9) qui est solidement reliée à une roue dentée (8) d'entraînement.
